# EUROPEAN PATENT SPECIFICATION

(11) **EP 1 632 367 B1**
(45) Date of publication and mention of the grant of the patent: **21.05.2008**
(21) Application number: 05017009.1
(22) Date of filing: 04.08.2005
(51) Int. Cl.: B60C 19/08, B29D 30/60

(54) **Pneumatic tire, producing method of pneumatic tire, and forming apparatus of rubber strip winding body**
Luftreifen, Luftreifenherstellungsverfahren, und Vorrichtung zum Formen eines Laufstreifens beim Wickeln eines Gummistreifens.
Pneumatique, méthode de fabrication d'un pneumatique, et dispositif de formation d'un élément par enroulement hélicoïdale d'une bande en caoutchouc

(30) Priority: 01.09.2004 JP 2004254581
(43) Date of publication of application: 08.03.2006
(73) Proprietor: SUMITOMO RUBBER INDUSTRIES, LTD., Hyogo-ken (JP)
(72) Inventor: Matsui, Hiroshi, Chuo-ku Kobe-shi, Hyogo-ken (JP)
(74) Representative: Manitz, Finsterwald & Partner GbR

(56) References cited:
- EP-A- 1 175 992
- EP-A- 1 375 118
- US-A- 3 607 497
- US-A1- 2004 055 682

## Description

### BACKGROUND OF THE INVENTION

### Field of the Invention

The present invention relates to a pneumatic tire, a producing method of the pneumatic tire, and a forming apparatus of a rubber strip winding body capable of discharging static electricity in a vehicle to a road surface even if silica-mixed rubber material is used for a rubber strip in a tire in which a tread rubber portion forming a tread-ground contact surface is made of rubber strip winding body.

### Description of the Related Art

To satisfy both low rolling resistance and wet grip performance of a tire, it is conventional proposed to mix silica instead of carbon black as a filler of a tread rubber. However, since silica has poor conductivity, electric resistance of the tire is increased and static electricity is accumulated in a vehicle. This causes many electrical malfunctions including radio interference such as radio noise.

To prevent the static electricity from being accumulated, a structure (so-called base pen structure) shown in Fig. 8 (A) is proposed (see Japanese Patent Application Laid-open No. H9-71112 for example). In this structure, a tread rubber (a) comprises two layers, i.e., a cap rubber layer (b) made of silica-mixed rolling resistance insulative rubber, and a base rubber layer (c) made of carbon black-mixed conductive rubber which is disposed on a radially inner side. A through terminal c1 is disposed on the base rubber layer (c). The through terminal passes through the cap rubber layer (b) and is exposed from the tread-ground contact surface (as). If this structure is employed, it is possible to discharge static electricity in a vehicle to a road surface from the base rubber layer (c) through the through terminal c1.

In recent years, as shown in Fig. 8 (B), there is proposed a so-called strip wind method (see Japanese Patent Application Laid-open No. 2000-94542 or US-A-2004/0055682, which corresponds to the preamble of claim 1, for example). In this method, various rubber materials including a tread rubber (a) is formed by a rubber strip winding body around which a rubber strip (d) is spirally wound and superposed on a circumferential direction. According to this method, it is unnecessary to store rubber-extruded products for rubber materials as intermediate stocks and thus, it is possible to enhance the producing efficiencyof tires. This method makes it possible to save space, and has great merits when many different kinds of, but small amount of tires are to be produced.

On the other hand, this strip wind method has a problem that since the rubber strip (d) is continuously wound, it is difficult to apply this method to the base pen structure.

### SUMMARY OF THE INVENTION

It is an object of the present invention to provide a pneumatic tire and a producing method of the pneumatic tire capable efficiently producing tire while taking advantage of merits of the strip wind method, excellently satisfying both low rolling resistance and wet grip performance, and suppressing electric resistance of a tread portion to a low level. It is another object of the invention to provide a forming apparatus of a rubber strip winding body capable of efficiently producing a rubber strip winding body used for the method.

A pneumatic tire of the present invention comprises a conductive tread conductive part which is disposed on an inner side of a tread portion and which is capable of being electrically continuous with a rim, and
a tread rubber portion comprising a rubber strip winding body in which a rubber strip is spirally wound and superposed in a circumferential direction, an outer surface of the tread rubber portion forming a tread-ground contact surface, an inner surface of the tread rubber portion being in contact with the tread conductive part and forming at least a portion of the tread portion,
at least one surface of the rubber strip is provided with a conductive film made of conductive material, an outer edge of the conductive film appears on the tread-ground contact surface, and an inner edge of the conductive film is in contact with the tread conductive part so that the conductive film forms a conductive path.

Since the pneumatic tire of the invention has such a structure, it is possible to efficiently produce a tread rubber portion while taking advantage of merit of the strip wind method. It is possible to excellently satisfy both the low rolling resistance and the wet grip performance by using silica-mixed rubber as the rubber strip. Since the conductive film disposed on at least one surface of the rubber strip forms the conductive path, electric resistance of the tire can be reduced to low level, and it is possible to prevent static electricity in a vehicle from being accumulated.

### BRIEF DESCRIPTION OF THE DRAWINGS

Fig. 1 is a sectional view showing an embodiment of a pneumatic tire of the present invention;
Fig. 2 is an enlarged sectional view of a tread portion of the tire;
Fig. 3 is a schematic sectional view of producing process of a raw tire;
Figs. 4 (A) and 4 (B) are schematic sectional views of a base rubber layer forming step and a tread rubber portion forming step S2;
Fig. 5 is a sectional view showing one example of a rubber strip;
Fig. 6 is a schematic sectional view of a forming apparatus of a tread rubber portion;
Fig. 7 is a schematic sectional view of an electric resistance measuring device; and
Figs. 8 (A) and 8 (B) are schematic sectional views of a tread portion used for explaining backgroundart.

### DETAILED DESCRIPTION OF THE PREFERRED EMBODIMENTS

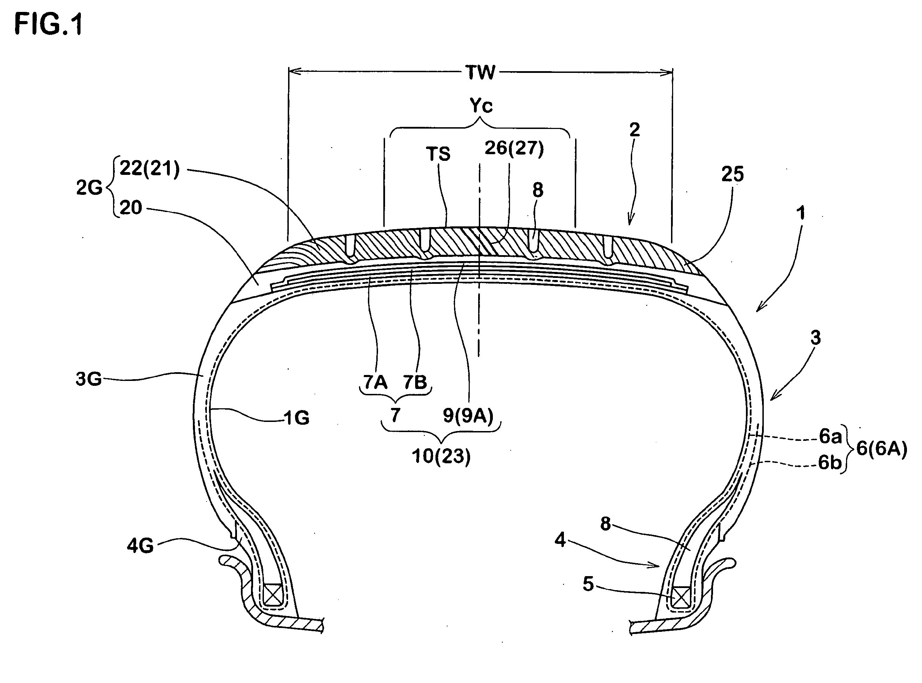

An embodiment of the present invention will be explained together with illustrated examples. Fig. 1 is a meridional sectional view when a pneumatic tire of the present invention is a passenger vehicle tire.

In Fig. 1, the pneumatic tire 1 includes a toroidal carcass 6 extending from a tread portion 2 to a bead core 5 of a bead portion 4 through a sidewall portion 3, and a tread reinforcing cord layer 10 including a belt 7 disposed radially outside of the carcass 6 and inside of the tread portion 2.

The carcass 6 is formed of one or more carcass plies 6A (one carcass ply 6A in this example) in which a carcass cord is arranged at an angle of 70 to 90° with respect to a circumferential direction of the tire. The carcass ply 6A comprises toroidal ply bodies 6a extending between the bead cores 5 and 5, and a folded-back portion 6b extending from inner sides of the ply body 6a in an axial direction of the tire around the bead cores 5 and 5. The ply bodies 6a and the folded-back portion 6b are continuously formed. Abead-reinforcing bead apex rubber 8 is disposed between the ply body 6a and the folded-back portion 6b. The bead apex rubber 8 extends radially outward from the bead core 5.

The tread reinforcing cord layer 10 includes at least a belt 7 disposed radially outside of the carcass 6. In this example, the tread reinforcing cord layer 10 comprises the belt 7 and a band 9 superposed on an outer side of the belt 7. The belt 7 comprises two or more (two in this example) belt plies 7A and 7B in which band cords are arranged at an angle of 15 to 40° with respect to the circumferential direction of the tire. The band cords are intersecting between the plies, thereby enhancing the rigidity of the belt 7, and reinforcing substantially the entire width of the tread portion 2 with hoop effect. The band 9 comprises one or more band plies 9A (one band ply 9A in this example) in which the band cords are spirally wound at an angle of 5° or less with respect to the circumferential direction of the tire. The band ply 9A restrains the belt 7 and enhances the steering stability and high speed endurance. As the band ply 9A, a pair of left and right edge band plies for covering only an outer end of the belt 7 in the axial direction of the tire, and a full band ply which covers substantially the entire width of the belt 7 are known, and they can be used alone or in combination. In this example, the band 9 comprises one full band ply.

In the carcass ply 6A, the belt plies 7A and 7B and the band ply 9A, like the conventional tire, topping rubbers for covering the cords are made of conductive rubber composites using carbon black as rubber filler. The rubber composite has volume-intrinsic electrical resistance value of less than 1.0×10⁸ (Ω•cm). With this, excellent conductive properties are given to the carcass 6, the belt 7 and the band 9 respectively. The "volume-intrinsic electrical resistance value of rubber" is a value measured using an electric resistance measuring device of ADVANTESTER8340A under conditions that voltage of 500 V is applied to a 15 cm² rubber sample having 2 mm thickness at temperature of 25°C and at humidity of 50%.

A sidewall rubber 3G which is adjacent to the outside of the carcass 6 and which forms an outer skin of the tire at the sidewall portion 3, and a rubber-deviation preventing clinch rubber 4G which is continuous with the sidewall rubber 3G at radially inner side and which forms an outer skin of the tire at the bead portion 4 and which comes into contact with a rim R are also made of conductive rubber composite whose volume-intrinsic electrical resistance value is less than 1.0×10⁸ (Ω•cam) using carbon black as rubber filler like the conventional tire.

Next, a tread rubber 2G is disposed radially outside of the tread reinforcing cord layer 10. In this example, the tread rubber 2G comprises two layers, i.e., a base rubber layer 20 which is superposed on the tread reinforcing cord layer 10 and which is located radially inside, and a tread rubber portion 22 which is a so-called cap rubber layer 21 which is superposed radially outer side and whose radially outer surface forms a tread-ground contact surface TS.

The base rubber layer 20 is made of conductive rubber composite in which carbon black is used as the rubber filler and the volume-intrinsic electrical resistance value is less than 1.0×10⁸ (Ω•cm). The base rubber layer 20 is electrically connected to the rim R through the tread reinforcing cord layer 10, the sidewall rubber 3G, the clinch rubber 4G and the like. Therefore, in this example, the base rubber layer 20 form a conductive tread conductive part 23 which is disposed inside of the tread portion 2 and which can be electrically connected to the rim R.

The tread rubber portion 22 (cap rubber layer 21) is made of rubber strip winding body in which a rubber strip 25 made of silica-mixed rubber as rubber filler is spirally wound and superposed in the circumferential direction. Since the tread rubber 22 is made of silica-mixed rubber, the wet grip performance of the tread rubber 2G is enhanced and rolling resistance on a dry road surface can be reduced.

In the case of the silica-mixed rubber, the amount of mixed silica is in a range of 30 to 100 parts by weight with respect to 100 parts by weight rubber base material. It is preferable that the lower limit value of the amount of mixed silica is 40 parts by weight, and the upper limit value thereof is 80 parts by weight, and more preferably 60 parts by weight. With this, it becomes possible to excellently satisfy both the low rolling resistance and wet grip performance. Examples of the rubber base material are natural rubber (NR), butadiene rubber (BR) which is polymer of butadiene, so-called styrene butadiene rubber (E-SBR) of emulsion polymerization, styrene butadiene rubber (S-SBR) of solution polymerization, composite polyisoprene rubber (IR) of isoprene polymer, nitrile rubber (NBR) which is copolymer of butadiene and acrylonitrile, and chloroprene rubber (CR) which is polymer of chloroprene. They can be used alone or in combination.

Silica to be mixed is not especially limited, but preferable silica is one showing colloidal characteristics in which nitrogen absorption specific surface (BET) is in a range of 150 to 250 m2*/g, oil suction amount of dibutyl phthalate (DBP) is 180 ml/100g or more because reinforcing effect of rubber and rubber working performance are excellent. Preferable silane coupling agents are bis (triethoxy silil propyl) tetra sulfide, and α-mercapt propyl trimethoxy silane.

To give other rubber properties, i.e., rubber elasticity, rubber hardness and the like to the silica-mixed rubber, carbon black can be mixed accessorily. At that time, it is preferable that the amount of carbon black to be mixed to the silica-mixed rubber is smaller than the amount of mixed silica, and is 15 parts by weight or smaller with respect to 100 parts by weight rubber base material, and more preferably 10 parts by weight or smaller. If the amount of carbon black exceeds 15 parts by weight, the low rolling resistance caused by silica is deteriorated, the rubber is prone to be harder, and satisfactory rubber properties as the tread rubber portion 22 (cap rubber layer 21) can not easily be obtained. It is not preferable if the amount of silica to be mixed exceeds 100 parts by weight because it becomes difficult to mix carbon black to obtain the other rubber properties.

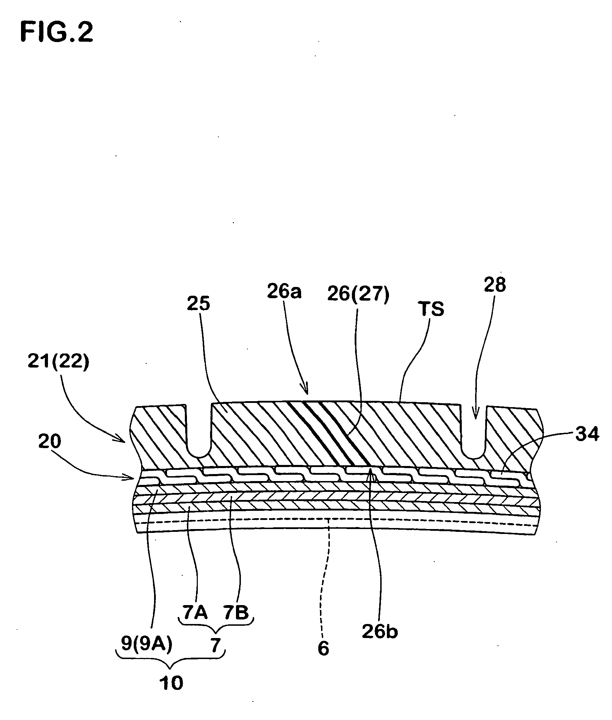

In this invention, to suppress the increase in tire electric resistance value caused by using the silica-mixed rubber for the tread rubber portion 22 (cap rubber layer 21), as shown in Fig. 2 in enlarged scale, at least one surface of the rubber strip 25 is provided with a conductive film 26 using conductive material. With this, an outer side line 26a of the conductive film 26 appears on the tread-ground contact surface TS, and an inner edge 26b of the conductive film 26 can form a conductive path 27 which comes in contact with the tread conductive part 23 (base rubber layer 20 in this example). Therefore, static electricity on the side of the vehicle can smoothly be discharged from the conductive path 27 to a road surface through the rim R, the clinch rubber 4G, the sidewall rubber 3G and the tread conductive part 23. The conductive path 27 is formed into an inclined line extending from the outer edge 26a to the inner edge 26b along the rubber strip 25.

In terms of discharging performance, it is preferable that the conductive path 27 is wound at least once, preferably three times or more in the circumferential direction of the tire. However, the conductive film 26 forming the conductive path 27 is a foreign matter and there is an adverse possibility that the conductive film 26 may cause peeling-off between the rubber strips 25 and 25. Therefore, it is preferable that the number of windings of the conductive path 27 is smaller than the total number of windings of the rubber strip 25, and the number of windings of the conductive path 27 is 50% or less of the total number of windings of the rubber strip 25, and more preferably 20% or less. The position where the conductive path 27 is formed is not especially limited only if the conductive path 27 is formed in a region other than in a vertical groove 28 extending in the circumferential direction of the tire, and this position is set in accordance with a tread pattern. In this regard, a tread central region Yc which is a width region of 50% of a tread ground-contact width TW around a tire equator C is preferable because the ground-contact length is long and stable grounding can be obtained. Since the conductive path 27 is continuous in the circumferential direction of the tire and its thickness is extremely thin, it is possible to suppress the deviated wear and adverse influence on running performance.

Next, a producing method of the pneumatic tire 1 having such a tread rubber portion 22 (cap rubber layer 21) will be explained.

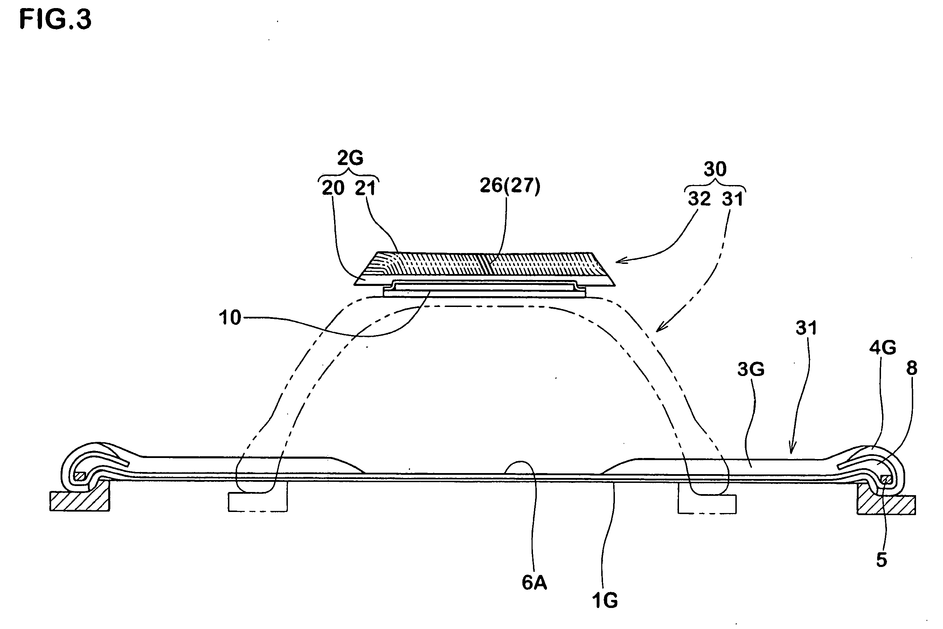

In the pneumatic tire, when a raw tire 30 before vulcanization formation is to be produced, as shown in Fig. 3, a tire base body 31 is allowed to swell in a toroidal form between the bead cores 5 and 5. An annular tread ring 32 which is integrally formed with the tread reinforcing cord layer 10 and the tread rubber 2G is adhered to a central portion of the swelled tire base body 31, thereby producing the raw tire 30.

The tire base body 31 comprises members other than the tread ring 32, e.g., the carcass ply 6A, the sidewall rubber 3G, the clinch rubber 4G, an inner liner rubber 1G and the bead apex rubber 8. Alternatively, the sidewall rubber 3G and the like may be adhered to an outer side of the carcass ply 6A after the tread ring 32 is adhered. To form the tread ring 32, the belt plies 7A and 7B and the band ply 9A are sequentially wound on a rotatable cylindrical drum 33, thereby forming the tread reinforcing cord layer 10, and the tread rubber 2G is formed on its outer peripheral surface, thereby producing the tread ring 32.

Here, steps other than a forming step S of the tread rubber 2G, e.g., a forming step of the tire base body 31, a forming step of the tread reinforcing cord layer 10 and the like are not especially limited, and conventionally known technique can appropriately be employed. Therefore, in this specification, only the forming step S of the tread rubber 2G which is different from the conventional technique will be explained.

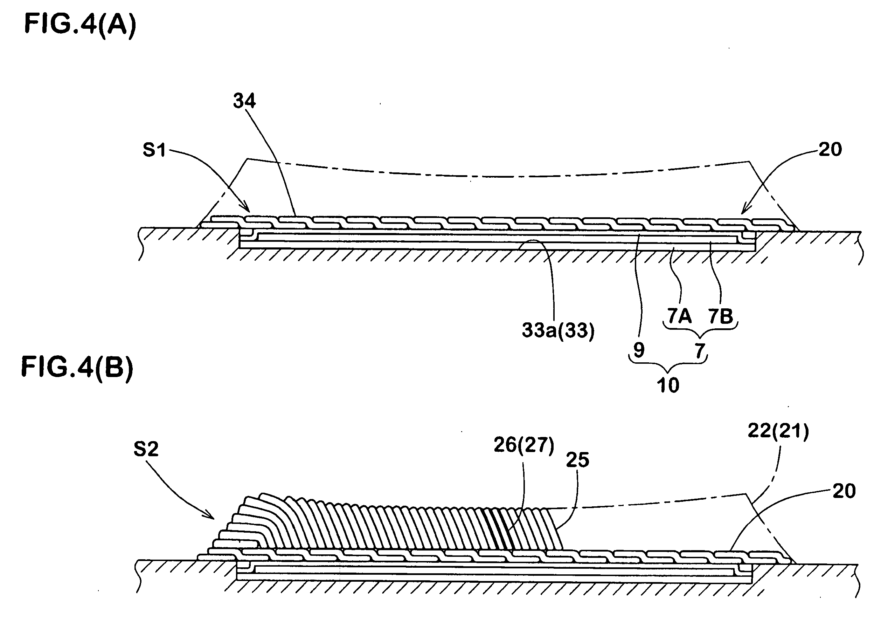

In this example, the forming step S of the tread rubber 2G includes a base rubber layer forming step S1 and a tread rubber portion forming step S2. In the base rubber layer forming step S1 of this example, as shown in Fig. 4 (A), unvulcanized rubber strip 34 comprising conductive rubber composite is spirally superposed and wound on the outer peripheral surface of the tread reinforcing cord layer 10 in the circumferential direction. With this, the base rubber layer 20 is formed as a rubber strip winding body. In this example, the tread reinforcing cord layer 10 is formed in a recess 33a in the circumferential direction provided in an outer peripheral surface of the drum 33, thereby flattening the outer peripheral surface of the drum 33 and the outer peripheral surface of the tread reinforcing cord layer 10. The rubber strip 34 is wound around the flattened outer peripheral surface to form the base rubber layer 20.

In the tread rubber portion forming step S2, unvulcanized rubber strip 25 comprising the silica-mixed rubber is spirally superposed and wound around the outer peripheral surface of the base rubber layer 20 in the circumferential direction. With this, the tread rubber portion 22 (cap rubber layer 21) is formed as the rubber strip winding body. At that time, the conductive film 26 using conductive material is provided on at least one surface of the rubber strip 25 (outer surface of the rubber strip 25 facing radially outside at the time of winding in this example), and a conductive path 27 which is wound at least once is formed in the tread rubber portion 22.

In this example, when the rubber strip 25 is supplied to the drum 33, the conductive film 26 is formed by applying, to the rubber strip 25, conductive solution in which conductive material is dissolved or dispersed in solvent. As the conductive material, carbon and metal powder having excellent conductivity can preferably be used. Especially carbon is mixed in a normal tire rubber, and the carbon is preferable in terms of safety. Water and organic solvent can be used as the solvent, but organic solvent such as toluene and hexane is preferable in terms of drying time of applied conductive solution. It is also preferable that rubber is mixed in the solvent in a form of latex because this enhances adhering strength with respect to the rubber strip 25, enhances viscosity and secures sufficient thickness of the conductive film 26. At that time, the rubber to be mixed is preferably the same rubber as the rubber base material of the silica-mixed rubber which forms the rubber strip 25 (e.g., NR if the silica-mixed rubber is NR, and SBR if the silica-mixed rubber is SBR) in terms of adhering strength.

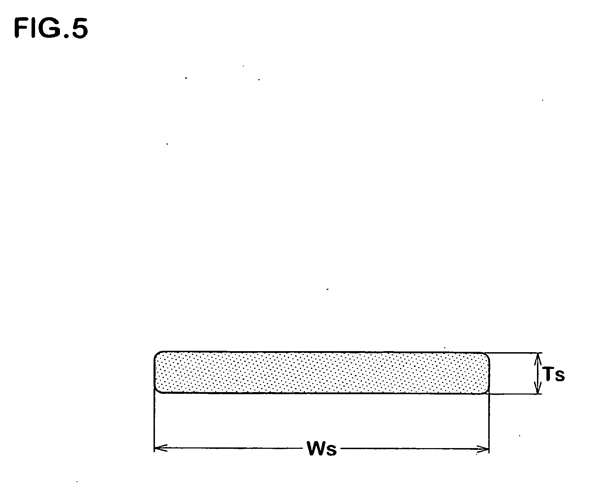

If a lateral sending pitch in the axial direction of the drum when the rubber strips 25 and 34 are spirally wound is controlled, cross sections of the base rubber layer 20 and the tread rubber portion 22 (cap rubber layer 21) into desired shapes. At that time, in this example, the rubber strips 25 and 34 are wound from one side to the other side of the tread rubber 2G in the same direction. With this, it is unnecessary to put the winding operation of the rubber strip 25 on standby until the formation of the base rubber layer 20 is completed. With this, the winding operation of the rubber strip 25 can be started slightly after the winding operation of the rubber strip 34, and the forming efficiency of the tread rubber 2G can be enhanced. To obtain the base rubber layer 20 and the tread rubber portion 22 (cap rubber layer 21) having desired cross sections, it is preferable to use, as the rubber strips 25 and 34, laterally long flat thin ribbon strips having width Ws of 5 to 20 mm and thickness Ts of 0.5 to 2.0 mm as shown in Fig. 5.

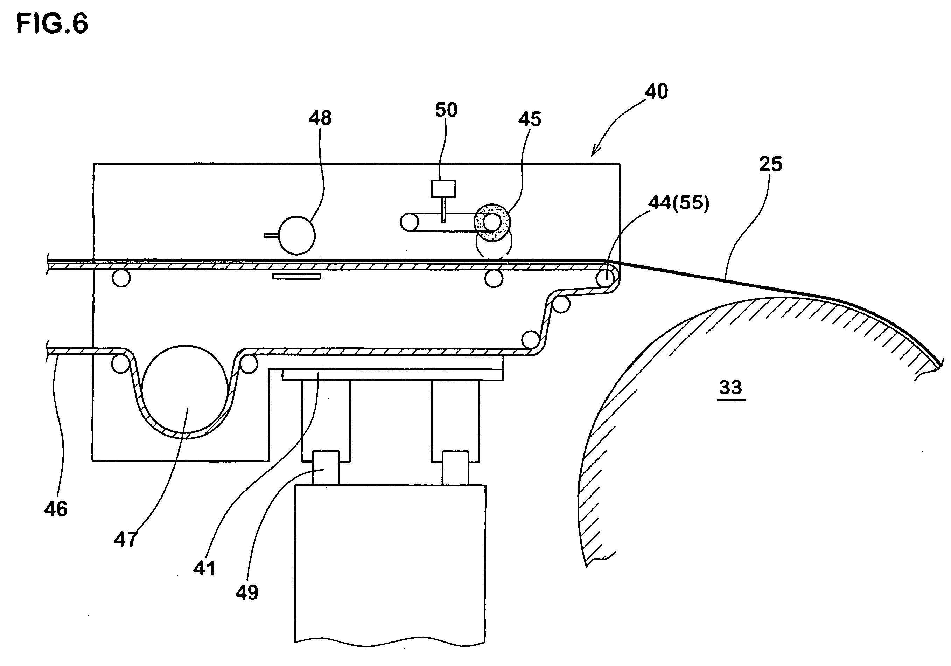

Fig. 6 shows a forming apparatus 40 of the rubber strip winding body which forms the tread rubber portion 22. As shown in Fig. 6, the forming apparatus 40 includes a moving stage 41 which can laterally move in parallel to an axial direction of the drum 33. The moving stage 41 is provided with a winding roller 44 and an applying roller 45. The winding roller 44 supplies, to the drum 33, a rubber strip 25 to be transferred, and winds the rubber strip 25 together with the lateral movement of the moving stage 41. The applying roller 45 can move forward and backward such that the applying roller 45 can come into contact with and separate from one surface of the supplied rubber strip 25, the applying roller 45 comes into contact with the one surface, thereby applying the conductive solution to form the conductive film 26.

In this example, an endless continuous cord-like transfer belt 46 is wound by a plurality of guide rollers 55 including the winding roller 44 such that the transfer belt 46 can be turned, and the rubber strip 25 is adhered to the transfer belt 46 and is transferred and supplied. In the drawing, a symbol 47 represents a motor which drives the transfer belt 46, a symbol 48 represents cutting means which cut the rubber strip 25 at desired length, a symbol 49 represents a guide rail which guides the moving stage 41 such that the moving stage 41 can move laterally, and the lateral sending pitch of the moving stage 41 is controlled by control means (not shown). The applying roller 45 can come into contact with and separate from the rubber strip 25 by expansion of a cylinder 50 or the like. The applying roller 45 can form the conductive path 27 at desired position of the tread rubber portion 22 (cap rubber layer 21) at desired number of windings.

In this invention, the base rubber layer 20 can also be formed by once winding an extruded product which is extruded from a rubber extruder with desired cross section shape without using the rubber strip winding body. The tread rubber 2G can also be formed using only the tread rubber portion 22 (cap rubber layer 21) without using the base rubber layer 20. In this case, the tread reinforcing cord layer 10 constitutes the tread conductive part 23.

According to the present invention, it is possible to form various tire rubber members other than the tread rubber portion 22 such as the sidewall rubber 3G, the inner liner rubber 1G, the clinch rubber 4G and the bead apex rubber 8 by means of the rubber strip winding body. Although especially preferable embodiment of the present invention has been described in detail; the invention is not limited to the illustrated embodiment, and the invention can variously be modified and carried out.

### Examples

Pneumatic tires (size: 225/55R16) having the basic structure shown in Fig. 1 and in which the tread rubber portion (cap rubber layer) is formed by the strip wind method were prototyped under the specifications shown in Table 1. Then, rolling resistance and electric resistance of each of the prototyped tires were measured. Results of the measurements are described in Table 1. Specifications other than those described in Table 1 are the same.

In the tires of the example of the present invention and comparative example, tread rubber portions (cap rubber layers) are formed by the strip wind method. The mixed amount of rubber strip in rubber is shown in Table 2. Only in the examples of the present invention, conductive solution is applied to one surface of the rubber strip to form a conductive film (conductive path). The same rubber (SBR) as that of the rubber base material of the tread rubber portion and carbon which was conductive material were dissolved in solvent (toluene), and this was used as the conductive solution. The mixed amount of carbon is 30 parts by weight with respect to 100 parts by weight rubber.

### (1) Rolling resistance:

A rolling resistance tester is used, and the rolling resistance was measured at three different running speeds, i.e., 40 km/h, 80 km/h, 120 km/h under conditions of rim (16x7JJ), internal pressure of 200 kPa and load of 4.8 kN. The rolling resistance of each running speed was converted into index in which rolling resistance of the tire of the comparative example 1 was set to 100, and average value of the converted values of the rolling resistance at each running speed was indicated as a rolling resistance index of each tire. The smaller the value is, the smaller and better the rolling resistance is.

### (2) Electric resistance of tire

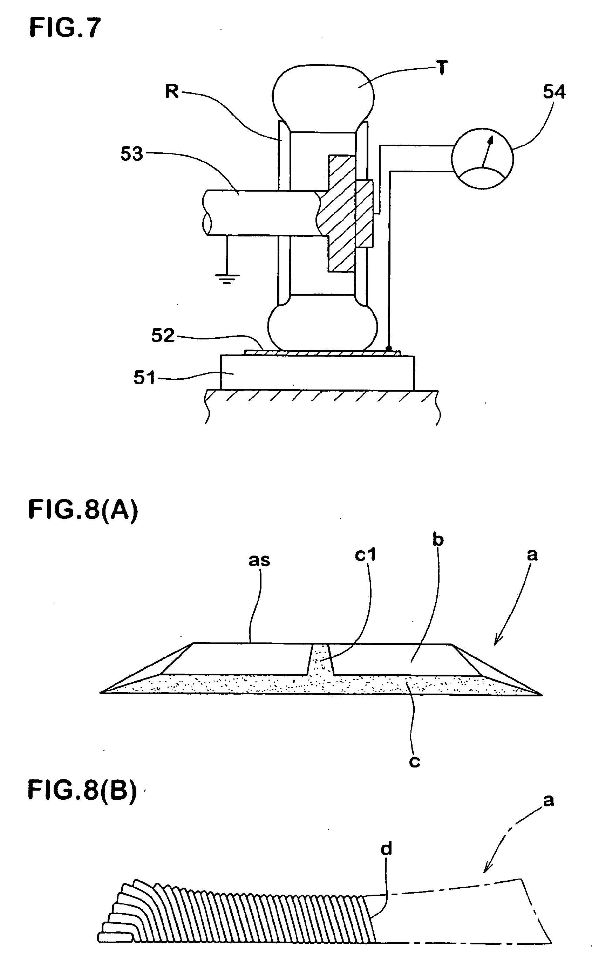

As shown in Fig. 7, a measuring apparatus comprises an insulative plate 51, a conductive metal plate 52 disposed on the insulative plate 51, a conductive tire mounting shaft 53 for holding a tire T, and an electric resistance measuring device 54. Using the measuring apparatus, electric resistance value of an assembly of a tire and a rim was measured in conformity with JATMA specification.

A mold release agent and contamination are sufficiently eliminated from a surface of the tire T, the tire is sufficiently dried, the tire is mounted on a conductive rim (16x7JJ) made of aluminum alloy, and internal pressure (200 kPa) and load (5.3 kN: load of 80% of maximum load ability) are applied. Test environment temperature (test room temperature) is set to 25°C, and moisture is set to 50%. A surface of the metal plate 52 is polished, and electric resistance value is set to 10 Ω or less. Electric resistance value of the insulative plate 51 is set to 10¹² Ω or more. A measuring range of the electric resistance measuring device 54 is 10³ to 1.6×10¹⁶ Ω, and test voltage (applied voltage) is set to 1000 V.

The test is carried out in the following manner:
<1> A mold release agent and contamination are sufficiently eliminated from the tire T, the tire is sufficiently dried as described above, and the rim is mounted on the tire T using soapy water.
<2> The tire T is left for two hours in a test room and then, the tire is mounted on the tire mounting shaft 53.
<3> A break-in load operation is carried out. More concretely, the load (5.3 kN) is applied to the tire T for 0.5 minutes, the load is further applied for 0.5 minutes after release, and the load is further applied for two minutes after release.
<4> Then, the test voltage (1000 V) is applied and after five minutes elapsed, electric resistance value between the tire mounting shaft 53 and the metal plate 52 is measured by the electric resistance measuring device 54. The resistance value is measured at four positions separated from one another through 90° in the circumferential direction of the tire, and the maximum value is employed as the electric resistance value (measured value) of the tire T.

**Table 1**

| | Comparative Example 1 | Comparative Example 2 | Example 1 | Example 2 | Example 3 | Example 4 |
|---|---|---|---|---|---|---|
| Cap rubber layer | Strip wind | Strip wind | Strip wind | Strip wind | Strip wind | Strip wind |
| • Mixed rubber | Mixed A | Mixed B | Mixed A | Mixed A | Mixed A | Mixed A |
| • Conductive film | Absence | Absence | Presence | Presence | Presence | Presence |
| • Number n of windings of conductive path | - | - | 1 | 3 | 5 | 7 |
| • Thickness (mm) of conductive path | - | - | 0.1 | 0.1 | 0.1 | 0.1 |
| Rolling resistance | 100 | 120 | 100 | 100 | 100 | 100 |
| Electric resistance of tire (×10⁸ Ω) | 2.4 | 0.6 | 0.9 | 0.8 | 0.6 | 0.7 |

**Table 2**

| | Mixed A | Mixed B |
|---|---|---|
| Rubber base material | | |
| • SBR | 80 | 80 |
| • BR | 20 | 20 |
| Silica | 50 | 10 |
| Carbon black | 10 | 50 |
| Zinc oxide | 3.0 | 3.0 |
| Stearic acid | 2.0 | 2.0 |
| Antioxidant | 2.0 | 2.0 |
| Aromatic oil | 20 | 20 |
| Sulfur | 1.5 | 1.5 |

As shown in Table 1, in the case of the tire of the example of the invention, it can be confirmed that the electric resistance of the tire can be suppressed to a low value while maintaining excellent low rolling resistance even if the tread rubber portion (cap rubber layer) is formed by the strip wind method.

## Claims

1. A pneumatic tire (1) comprising a tread conductive part (20) which is disposed on an inner side of a tread portion (2) and which is capable of being electrically continuous with a rim, and
a tread rubber portion (22) comprising a rubber strip winding body in which a rubber strip (25) is spirally wound and superposed in a circumferential direction, an outer surface of the tread rubber portion forming a tread-ground contact surface, an inner surface of the tread rubber portion (22) being in contact with the tread conductive part (20) and forming at least a portion of the tread portion, **characterized in that**
at least one surface of the rubber strip (25) is provided with a conductive film (26) made of conductive material, an outer edge (26a) of the conductive film appears on the tread-ground contact surface, and an inner edge (26b) of the conductive film is in contact with the tread conductive part so that the conductive film forms a conductive path (27).

2. The pneumatic tire according to claim 1, wherein the tread conductive part is a tread reinforcing cord layer (10) including a belt (7), or a base rubber layer (20) forming a base portion of the tread rubber portion (22).

3. The pneumatic tire according to claim 1 or 2, wherein the conductive path is wound around the tire at least once.

4. The pneumatic tire according to any one of claims 1 to 3, wherein the conductive film (26) is formed by applying, on at least one surface of the rubber strip (25), conductive solution obtained by solving or dispersing conductive material in a solvent.

5. The pneumatic tire according to any one of claims 1 to 4, wherein the conductive material is carbon or metal powder.

6. A producing method of a pneumatic tire (1) having a tread rubber portion (22) comprising a rubber strip winding body in which a rubber strip (25) is spirally wound and superposed in a circumferential direction, an outer surface of the tread rubber portion forms a tread-ground contact surface, **characterized in that**
at least one surface of the rubber strip (25) is provided with a conductive film (26) made of conductive material, an outer edge of the conductive film appears on the tread-ground contact surface, and an inner edge of the conductive film appears on an inner surface of the tread rubber portion (22).

7. A forming apparatus (40) of a rubber strip winding body which forms a tread rubber portion (22) whose outer peripheral surface forms a tread-ground contact surface by spirally winding and superposing a rubber strip (25) in a circumferential direction on a rotatable drum (33), comprising
a moving stage (41) capable of laterally moving in parallel to an axial direction of the drum (33),
a winding roller (44) provided on the moving stage, supplying a rubber strip (25) to the drum, and winding the rubber strip together with lateral movement of the moving stage, and **characterized by**
an applying roller (45) provided on the moving stage, and capable of moving forward and backward such that the applying roller can come into contact with and separate from one surface of the supplied rubber strip, thereby applying, on this one surface, conductive solution obtained by solving or dispersing conductive material in a solvent, and forming a conductive film.

## Patentansprüche

1. Luftreifen (1) mit einem Laufflächenleitungsteil (20), der auf einer Innenseite eines Laufflächenabschnitts (2) angeordnet ist und der mit einer Felge elektrisch durchgehend sein kann, und
einem Laufflächenkautschukabschnitt (22), der einen Kautschukstreifenwickelkörper umfasst, in welchem ein Kautschukstreifen (25) in einer Umfangsrichtung spiralförmig gewickelt und übereinander gelegt ist, wobei eine Außenfläche des Laufflächenkautschukabschnitts eine Laufflächen-Boden-Kontaktfläche bildet, eine Innenfläche des Laufflächenkautschukabschnitts (22) in Kontakt mit dem Laufflächenleitungsteil (20) steht und zumindest einen Abschnitt des Laufflächenabschnitts bildet,
**dadurch gekennzeichnet, dass**
zumindest eine Oberfläche des Kautschukstreifens (25) mit einem leitfähigen Film (26) versehen ist, der aus leitfähigem Material hergestellt ist, wobei eine Außenkante (26a) des leitfähigen Films an der Laufflächen-Boden-Kontaktfläche erscheint und eine Innenkante (26b) des leitfähigen Films mit dem Laufflächenleitungsteil in Kontakt steht, so dass der leitfähige Film eine leitfähige Strecke (27) bildet.

2. Luftreifen nach Anspruch 1,
wobei der Laufflächenleitungsteil eine Laufflächenverstärkungskordschicht (10) ist, die einen Gürtel (7) umfasst, oder eine Basiskautschukschicht (20) ist, die einen Basisabschnitt des Laufflächenkautschukabschnitts (22) bildet.

3. Luftreifen nach Anspruch 1 oder 2,
wobei die leitfähige Strecke zumindest einmal um den Reifen herum gewickelt ist.

4. Luftreifen nach einem der Ansprüche 1 bis 3,
wobei der leitfähige Film (26) gebildet ist, indem eine leitfähige Lösung, die durch Lösen oder Dispergieren leitfähigen Materials in einem Lösungsmittel erhalten ist, auf zumindest einer Fläche des Kautschukstreifens (25) aufgetragen ist.

5. Luftreifen nach einem der Ansprüche 1 bis 4,
wobei das leitfähige Material Ruß oder Metallpulver ist.

6. Herstellungsverfahren eines Luftreifens (1) mit einem Laufflächenkautschukabschnitt (22), der einen Kautschukstreifenwickelkörper umfasst, in dem ein Kautschukstreifen (25) in einer Umfangsrichtung spiralförmig gewickelt und übereinander gelegt wird, wobei eine Außenfläche des Laufflächenkautschukabschnitts eine Laufflächen-Boden-Kontaktfläche bildet,
**dadurch gekennzeichnet, dass**
zumindest eine Oberfläche des Kautschukstreifens (25) mit einem leitfähigen Film (26) versehen wird, der aus leitfähigem Material hergestellt ist, wobei eine Außenkante des leitfähigen Films an der Laufflächen-Boden-Kontaktfläche erscheint und eine Innenkante des leitfähigen Films an einer Innenfläche des Laufflächenkautschukabschnitts (22) erscheint.

7. Formungsvorrichtung (40) eines Kautschukstreifenwickelkörpers, der einen Laufflächenkautschukabschnitt (22) bildet, dessen Außenumfangsfläche eine Laufflächen-Boden-Kontaktfläche bildet, indem ein Kautschukstreifen (25) in einer Umfangsrichtung auf einer drehbaren Trommel (33) spiralförmig gewickelt und übereinandergelegt wird, umfassend
ein sich bewegendes Gestell (41), das sich seitlich parallel zu einer axialen Richtung der Trommel (33) bewegen kann,
eine Wickelwalze (44), die an dem sich bewegenden Gestell vorgesehen ist und der Trommel einen Kautschukstreifen (25) zuführt und den Kautschukstreifen zusammen mit einer seitlichen Bewegung der Bewegungsstufe wickelt; und
**gekennzeichnet durch**
eine Auftragswalze (45), die an dem sich bewegenden Gestell vorgesehen ist und sich vorwärts und rückwärts bewegen kann, sodass die Auftragswalze in Kontakt mit einer Fläche des zugeführten Kautschukstreifens gelangen und sich von dieser trennen kann, wodurch auf diese Oberfläche eine leitfähige Lösung aufgetragen wird, die erhalten wird, indem leitfähiges Material in einem Lösungsmittel gelöst oder dispergiert wird, und ein leitfähiger Film gebildet wird.

## Revendications

1. Bandage pneumatique (1) comprenant une partie conductrice de bande de roulement (20) qui est disposée sur un côté interne d'une partie de bande de roulement (2) et qui est capable d'être électriquement continue avec une jante, et
une partie de caoutchouc de bande de roulement (22) comprenant un corps d'enroulement de ruban en caoutchouc dans laquelle un ruban en caoutchouc (25) est enroulé en spirale et superposé dans une direction circonférentielle, une surface externe de la partie de caoutchouc de bande de roulement formant une surface de contact avec la terre de bande de roulement, une surface interne de la partie de caoutchouc de bande de roulement (22) étant en contact avec la partie conductrice de bande de roulement (20) et formant au moins une partie de la partie de bande de roulement, **caractérisé en ce que**
au moins une surface du ruban en caoutchouc (25) est pourvue d'un film conducteur (26) fabriqué à partir d'un matériau conducteur, un bord externe (26a) du film conducteur apparaît sur la surface de contact avec la terre de bande de roulement, et un bord interne (26b) du film conducteur est en contact avec la partie conductrice de bande de roulement de sorte que le film conducteur forme un trajet conducteur (27).

2. Bandage pneumatique selon la revendication 1, dans lequel la partie conductrice de bande de roulement est une couche de fil câblé renforçant la bande de roulement (10) comportant une ceinture (7), ou une couche de caoutchouc de base (20) formant une partie de base de la partie de caoutchouc de bande de roulement (22).

3. Bandage pneumatique selon la revendication 1 ou 2, dans lequel le trajet conducteur est enroulé autour du bandage au moins une fois.

4. Bandage pneumatique selon l'une quelconque des revendications 1 à 3, dans lequel le film conducteur (26) est formé en appliquant, sur au moins une surface de la bande de caoutchouc (25), une solution conductrice obtenue en dissolvant ou dispersant un matériau conducteur dans un solvant.

5. Bandage pneumatique selon l'une quelconque des revendications 1 à 4, dans lequel le matériau conducteur est du carbone ou une poudre métallique.

6. Procédé de production d'un bandage pneumatique (1) présentant une partie de caoutchouc de bande de roulement (22) comprenant un corps d'enroulement de ruban en caoutchouc dans lequel un ruban en caoutchouc (25) est enroulé en spirale et superposé dans une direction circonférentielle, une surface externe de la partie de caoutchouc de bande de roulement forme une surface de contact avec la terre de bande de roulement, **caractérisé en ce que**
au moins une surface du ruban en caoutchouc (25) est pourvue d'un film conducteur (26) fabriqué à partir d'un matériau conducteur, un bord externe du film conducteur apparaît sur la surface de contact avec 1a terre de bande de roulement, et un bord interne du film conducteur apparaît sur une surface interne de la partie de caoutchouc de bande de roulement (22).

7. Appareil de formation (40) d'un corps d'enroulement de ruban en caoutchouc qui forme une partie de caoutchouc de bande de roulement (22) dont la surface périphérique externe forme une surface de contact avec la terre de bande de roulement en enroulant en spirale et superposant un ruban en caoutchouc (25) dans une direction circonférentielle sur un tambour rotatif (33), comprenant :
un étage mobile (41) capable de se déplacer latéralement parallèlement à une direction axiale du tambour (33),
un cylindre d'enroulement (44) prévu sur l'étage mobile, amenant un ruban en caoutchouc (25) au tambour, et enroulant le ruban en caoutchouc conjointement avec le déplacement latéral de l'étage mobile, et **caractérisé par**
un cylindre d'application (45) prévu sur l'étage mobile, et capable de se déplacer vers l'avant et vers l'arrière de telle sorte que le cylindre d'application peut venir en contact avec et se séparer d'une surface du ruban en caoutchouc amené, appliquant de ce fait, sur cette même surface, la solution conductrice obtenue en dissolvant ou dispersant le matériau conducteur dans un solvant, et en formant un film conducteur.
